Europäisches Patentamt

European Patent Office

Office européen des brevets

(11) Veröffentlichungsnummer : **0 009 119**
**B1**

# (12) EUROPÄISCHE PATENTSCHRIFT

(45) Veröffentlichungstag der Patentschrift :
03.02.82

(21) Anmeldenummer : 79102964.8

(22) Anmeldetag : 16.08.79

(51) Int. Cl.³ : **B 29 D 27/02**, B 29 B   1/06

(54) **Vorrichtung zum Herstellen eines Massiv- oder Schaumstoff bildenden Reaktionsgemisches aus fliessfähigen Komponenten.**

(30) Priorität : 26.08.78 DE 2837424

(43) Veröffentlichungstag der Anmeldung :
02.04.80 (Patentblatt 80/07)

(45) Bekanntmachung des Hinweises auf die Patenterteilung : 03.02.82 Patentblatt 82/05

(84) Benannte Vertragsstaaten :
BE CH DE FR GB IT NL SE

(56) Entgegenhaltungen :
DE - A1 - 2 555 156
DE - B2 - 2 507 580
DE - B2 - 2 607 641

(73) Patentinhaber : BAYER AG
Zentralbereich Patente, Marken und Lizenzen
D-5090 Leverkusen 1, Bayerwerk (DE)

(72) Erfinder : Schulte, Klaus, Ing. grad.
Opladener Strasse 5
D-5090 Leverkusen (DE)
Erfinder : Ersfeld, Heinrich
Biesenbach 11
D-5090 Leverkusen 31 (DE)

## Vorrichtung zum Herstellen eines Massiv- oder Schaumstoff bildenden Reaktionsgemisches aus fließfähigen Komponenten

Die Erfindung betrifft eine Vorrichtung zum Herstellen eines Massiv- oder Schaumstoff bildenden Reaktionsgemisches aus fließfähigen Komponenten, bestehend aus Vorratsbehältern, von denen Zuleitungen über Dosierpumpen zu einem Mischkopf führen und über Einspritzöffnungen in eine von einer Gehäusebohrung gebildeten Mischkammer münden, wobei in der Mischkammer der Steuerkolben eines Steuerorgans verschiebbar geführt ist, und wobei Rücklaufleitungen vorgesehen sind, die vor den Einspritzöffnungen abzweigen und wobei in mindestens einer der Rücklaufleitungen ein Absperrorgan angeordnet ist.

Mit solchen Vorrichtungen lassen sich Reaktionsgemische, die zellige Stoffe, wie Weich-, Halbhart-, Hart- und Strukturschamstoff (z.B. auf Basis Polyurethan oder Isocyanurat), aber auch nicht-zellige Stoffe, z.B. Elastomere, herstellen.

Die Herstellung von geformten Fertigteilen durch Ausreagieren des Gemisches in einem Formwerkzeug nimmt insbesondere in der Automobilindustrie für die Serienfertigung von Sitzschalen, Armaturenbrettern, Lenkrädern, crashpads, Bumpern und soft-faces immer größere Dimensionen an, so daß einwandfreies Arbeiten gewährleistet sein muß.

Das Umsteuern der Reaktionskomponenten von « Kreislauf » auf « Mischen » und umgekehrt bereitet immer noch erhebliche Schwierigkeiten. Ein exaktes zeitsynchrones Eintreten der in unterschiedlichen Viskositäten vorliegenden Reaktionskomponenten bei unterschiedlichen Mengendurchsätzen ist für das Fertigen einwandfreier Formteile von größter Bedeutung. Bereits geringstes Voreilen einer Komponente zieht Fehlerstellen im Fertigteil nach sich. Weiterhin müssen die Mischkammervolumina dem gesamten Mengendurchsatz angepaßt sein, d.h. kleinere Durchsatzmengen von weniger als z.B. 5 kg/min erfordern auch kleinste, d.h. enge, Mischräume. Beide Forderungen werden mit den zur Zeit auf dem Markt befindlichen Geräten nicht zur vollsten Zufriedenheit erreicht.

So existieren z.B. Mischköpfe (DE-A-2 364 5ol), die mit hydraulisch betätigten Nadelkreislaufdüsen arbeiten. Das synchrone Umsteuern wird durch ein hydraulisches Servosystem erzielt, was gewisse Unsicherheiten in sich birgt, wie z.B. Luft im hydraulischen System, Schwergängigkeit einer Düse und anderes mehr. Außerdem muß beim Einsatz solcher Düsen zur Reinigung der Mischkammer ein Spülvorgang stattfinden oder es wird ein zusätzlich angetriebener Stößel benötigt. Die Konstruktion ist dementsprechend aufwendig.

Ein weiterer Mischkopf (DE-A-2 555 156) dieser Art ist mit Einlaßventilen ausgestattet, von denen jedes in einer mit einer zugeordneten Rücklaufleitung ständig verbundenen Kammer angeordnet ist. In der Rücklaufleitung ist außerdem ein bei jedem Einspritzvorgang in die Schließstellung gesteuertes Absperrventil angeordnet. Die Steuerung erfolgt über einen aufwendigen Mechanismus durch den Ausstoßkolben bzw. durch Abtasten der Stellung des Ausstoßkolbens.

Es sind auch Mischkopfausführungen (DE-A-2 007 935) bekannt, bei denen die Umsteuerung der Komponenten mittels Kreislaufnuten, welche in den Steuerkolben eines Steuerorgans eingebracht sind, vorgenommen wird. Hierbei entstehen ebenfalls Nachteile. Die Druckeinstellung der Komponenten erfolgt durch Düsen. In Kreislaufstellung soll möglichst der gleiche Druck herrschen wie später in Mischstellung. Dies ist jedoch nur schwerlich möglich, da sich zu den durch die Einspritzdüsen hervorgerufenen Drücken die Druckverluste in den Kreislaufnuten und in den nachfolgenden Leitungen zuaddieren. Weiterhin ist es nicht möglich, bei dieser Mischkopfkonzeption mit kleineren Steuerkolben-Durchmessern zu arbeiten, da konstruktiv die beiden Kreislaufnuten getrennt voneinander untergebracht werden müssen. So ist das Mischkammervolumen, insbesondere für kleinere Durchsatzmengen, erheblich eingeschränkt. Bei kleineren Durchmessern wird zum einen die Abdichtung zwischen den Kreislaufnuten des Steuerkolbens für die verschiedenen Reaktionspartner äußerst problematisch, zum anderen erhöht sich der Druck in Kreislaufstellung unverhältnismäßig stark bei kleineren Kreislaufnuten.

Aufgabe der vorliegenden Erfindung ist es deshalb, eine Vorrichtung zu schaffen, bei der eine exakte Zwangsumsteuerung der Komponenten, einfache Steuerart, hohe Variabilität in der Einstellung und Ausbildung des Mischkammervolumens, insbesondere für kleinere Ausstoßmengen, einfache und gegebenenfalls unabhängige und separate Anpassung des Kreislaufdruckes zum Injektionsdruck und einwandfreie Abdichtung der Steuerorgane möglich sind.

Diese Aufgabe wird dadurch gelöst, daß das Absperrorgan als rückwärtige Verlängerung des Steuerorgans ausgebildet ist, die mindestens einen Überbrückungskanal aufweist und im Gehäuse geführt ist, und daß die Rücklaufleitung durch den die Verlängerung umgebenden Gehäuseteil hindurchführt, wobei der Überbrückungskanal in einem solchen Abstand von der Steuerkante des Steuerkolbens angeordnet ist, daß er nur in der Pausenstellung die zu- und abführenden Abschnitte der Rücklaufleitung verbindet.

Dadurch wird erreicht, daß mittels der Zwangssteuerung das Umsteuern von Mischen auf Kreislauf und umgekehrt exakt mit dem Freigeben und Verschließen der Einspritzöffnungen stattfindet. Dabei ist das Abdichtungsproblem erheblich verringert, und der Durchmesser der Mischkammer und damit der des Steuerkolbens können zum Erzielen eines minimalen Mischkammervolumens stark herabgesetzt werden. Hierbei ist die bauliche Einheit von Steuerorgan und Absperrorgan von besonderem Vorteil, weil keinerlei Zwischenglieder notwendig sind.

Nach einer besonderen Ausführungsform ist das Absperrorgan mehreren Rücklaufleitungen zugeordnet und weist für jede dieser Rücklaufleitungen einen Überbrückungskanal auf. Dadurch wird eine besonders einfache Bauweise erreicht.

Vorzugsweise ist zwischen den Verschiebungsbereichen der Überbrückungskanäle eine Abdichtung vorgesehen. Es wird damit sichergestellt, daß die durch die Überbrückungskanäle strömenden Komponenten auch nicht in kleinsten Mengen miteinander in Berührung kommen können.

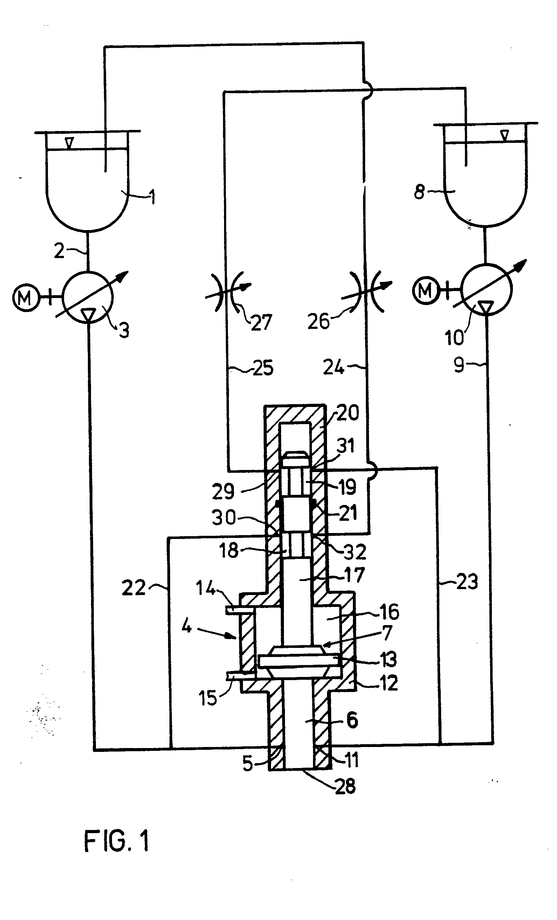

In der Zeichnung ist die erfindungsgemäße Vorrichtung in einem Ausführungsbeispiel rein schematisch dargestellt und nachstehend näher beschrieben.

Ein Vorratsbehälter 1 für die Polyolkomponente ist über eine Zuleitung 2, die eine Dosierpumpe 3 enthält, mit einem Mischkopf 4 verbunden und mündet über eine Einspritzöffnung 5 in eine Mischkammer, die jedoch in der zeichnerischen Darstellung vom Steuerkolben 6 eines hydraulischen Steuerorgans 7 ausgefüllt ist. Von einem Vorratsbehälter 8, der die Isocyanatkomponente enthält, führt eine Zuleitung 9 über die Dosierpumpe 10 zur Einspritzöffnung 11 des Mischkopfes 4. Das Steuerorgan 7 ist im Mischkopfgehäuse 12 geführt; sein Hydraulikkolben 13 ist in einer mit Zu- und Ableitungen 14, 15 versehenen Hydraulikkamer 16 verschiebbar. An der der Mischkammer abgewandten Seite des Hydraulikkolbens 13 ist eine schaftartige Verlängerung 17 angeordnet, die zwei als Ringnuten ausgebildete Überbrückungskanäle 18, 19 aufweist. Diese Verlängerung 17 ist in einem Fortsatz 20 des Mischkopfgehäuses 12 geführt und besitzt zwischen den Verschiebungsbereichen der Überbrückungskanäle 18, 19 eine Dichtung 21. Von den Zuleitungen 2, 9 zweigen Rücklaufleitungsabschnitte 22, 23 vor den Einspritzöffnungen 5, 11 ab und münden jeweils im Verschiebungsbereich einer der beiden Überbrückungskanäle 18, 19. Gegenüber führen die Rücklaufleitungsabschnitte 24, 25, die Drosselventile 26, 27 enthalten, ab und enden in den Vorratsbehältern 1, 8. Der Hub des Steuerorgans 7, die Steuerkante 28 des Steuerkolbens 6, der Abstand der Überbrückungskanäle 18, 19 davon und die Lage der Einmündungen 30, 31 und der Ausmündungen 29, 32 sind derart aufeinander abgestimmt, daß bei geöffneten Einspritzöffnungen 5, 11, also in Mischstellung des Steuerorgans 7, die Überbrückungskanäle 18, 19 sich außerhalb des Bereiches der Einmündungen 30, 31 und Ausmündungen 29, 32 befinden. In Pausenstellung des Steuerorgans 7 verbinden hingegen die Überbrückungskanäle 18, 19 die Rückleitungsabschnitte 22, 24 bis 23, 25.

Die Arbeitsweise der Vorrichtung ist folgende: Das Steuerorgan 7 befindet sich in Pausenstellung, d.h., der Steuerkolben 6 verschließt die Einspritzöffnungen 5, 11. Von den Vorratsbehältern 1, 8 werden die Komponenten mittels der Dosierpumpen 3, 10 durch die Zuleitungen 2, 9 über die Rücklaufleitungsabschnitte 22, 23, die Überbrückungskanäle 18, 19 und die Rücklaufleitungsabschnitte 24, 25 sowie über die auf 100 bar eingestellten Drosselventile 26, 27 zurück in die Vorratsbehälter 1, 8 gepumpt. Wird nun Hydraulikflüssigkeit durch die Zuleitung 15 in die Hydraulikkammer 16 gepreßt, verschiebt sich das Steuerorgan 7 in Mischstellung. Dabei werden die Einspritzöffnungen 5, 11 freigegeben und die Komponenten dringen in die Mischkammer ein, vermischen sich und das Gemisch fließt in ein Formwerkzeug (nicht dargestellt) ab. Gleichzeitig mit der Freigabe der Einspritzöffnungen 5, 11 wird die Verbindung der Rückleitungsabschnitte 22, 24 bzw. 23, 25 durch die Verlängerung 17 unterbrochen. Ist die gewünschte Gemischmenge erzeugt worden, schaltet das Steuerorgan 7 wieder auf die Pausenstellung um.

## Ansprüche

1. Vorrichtung zum Herstellen eines Massivoder Schaumstoff bildenden Reaktionsgemisches aus fließfähigen Komponenten, bestehend aus Vorratsbehältern (1, 8), von denen Zuleitungen (2, 9) über Dosierpumpen (3, 10) zu einem Mischkopf (4) führen und über Einspritzöffnungen (5, 11) in eine von einer Gehäusebohrung gebildete Mischkammer münden, wobei in der Mischkammer der Steuerkolben (6) eines Steuerorgans (7) verschiebbar geführt ist, und wobei Rücklaufleitungen (22, 24; 23, 25) vorgesehen sind, die vor den Einspritzöffnungen (5, 11) abzweigen, und wobei in mindestens einer der Rücklaufleitungen (22, 24; 23, 25) ein Absperrorgan (17) angeordnet ist, dadurch gekennzeichnet, daß das Absperrorgan (17) als rückwärtige Verlängerung (17) des Steuerorgans (7) ausgebildet ist, die mindestens einen Überbrückungskanal (18, 19) aufweist und im Gehäuse (20) geführt ist, und daß die Rücklaufleitung (22, 24; 23, 25) durch den die Verlängerung (17) umgebenden Gehäuseteil (20) hindurchführt, wobei der Überbrückungskanal (18, 19) in einem solchen Abstand von der Steuerkante (28) des Steuerkolbens (6) angeordnet ist, daß er nur in der Pausenstellung des Steuerkolbens (6) die zu- und abführenden Abschnitte (22, 23; 24, 25) der Rücklaufleitung verbindet.

2. Vorrichtung nach Anspruch 1, dadurch gekennzeichnet, daß das Absperrorgan (17) mehreren Rücklaufleitungen (22, 24; 23, 25) zugeordnet ist und für jede dieser Rücklaufleitungen (22, 24; 23, 25) Überbrückungskanäle (18, 19) aufweist.

3. Vorrichtung nach Anspruch 2, dadurch gekennzeichnet, daß zwischen den Verschiebungsbereichen der Überbrückungskanäle (18, 19) eine Abdichtung (21) vorgesehen ist.

## Claims

1. An apparatus for the production of solid- or foam-forming reaction mixture of fluid components, consisting of storage vessels (1, 8), from which feed pipes (2, 9) lead via metering pumps (3, 10) to a mixing head (4) and open through injection openings (5, 11) into a mixing chamber formed by a housing bore, the control plunger of a control member (7) being displaceably guided in the mixing chamber ; return pipes (22, 24 ; 23, 25) which branch off ahead of the injection openings (5, 11) being provided ; and a shut-off member (17) being arranged in at least one of the return pipes (22, 24 ; 23, 25), characterised in that the shut-off member (17) is formed by a rearward extension (17) of the control member (7) which comprises at least one by-pass duct (18, 19) and which is guided in the housing (20), and in that the return pipe (22, 24 ; 23, 25) leads through that part (20) of the housing which surrounds the extension (17), the by-pass duct (18, 19) being arranged at such a distance from the control edge (28) of the control plunger (6) that it only connects the feed and discharge sections (22, 23 ; 24, 25) of the return pipe in the rest position of the control plunger (6).

2. An apparatus as claimed in Claim 1, characterised in that the shut-off member (17) is associated with several return pipes (22, 24 ; 23, 25) and comprises by-pass ducts (18, 19) for each of these return pipes (22, 24 ; 23, 25).

3. An apparatus as claimed in Claim 2, characterised in that a seal (21) is provided between the displacement zones of the by-pass ducts (18, 19).

## Revendications

1. Dispositif destiné à la préparation d'un mélange réactionnel formant une mousse ou une matière solide à partir de constituants fluides et se composant de réservoirs (1, 8) dont les conduits d'amenée (2, 9) parviennent, par l'intermédiaire de pompes doseuses (3, 10) à une tête de mélange (4) et débouchent, par l'intermédiaire d'ouvertures d'injection (5, 11) dans une chambre de mélange formée d'un vide d'enveloppe, le piston (6) d'un organe de commande (7) étant monté à l'état mobile dans la chambre de mélange, des conduits de retour (22, 24 ; 23, 25) étant prévus, lesquels bifurquent en amont des ouvertures d'injection (5, 11), et un organe d'obturation (17) étant disposé dans au moins l'un des conduits de retour (22, 24 ; 23, 25), caractérisé en ce que l'organe d'obturation (17) est conçu comme un prolongement arrière (17) de l'organe de commande (7), prolongement présentant au moins un canal de liaison (18, 19) et étant monté dans l'enveloppe (20) ; et en ce que le conduit de retour (22, 24 ; 23, 25) pénètre par la partie d'enveloppe (20) entourant le prolongement (17), le canal de liaison (18, 19) étant disposé à une distance du bord (28) du piston de commande (6) telle qu'il ne relie les sections d'admission et d'émission (22, 23 ; 24, 25) du conduit de retour que dans la position de repos du piston de commande (6).

2. Dispositif selon la revendication 1, caractérisé en ce que l'organe d'obturation (17) est rattaché à plusieurs conduits de retour (22, 24 ; 23, 25) et présente des canaux de liaison (18, 19) pour chacun de ces conduits de retour (22, 24 ; 23, 25).

3. Dispositif selon la revendication 2, caractérisé en ce qu'un joint étanche (21) est prévu entre les zones de déplacement des canaux de liaison (18, 19).

FIG. 1